# EUROPÄISCHE PATENTSCHRIFT

(11) **EP 2 681 089 B1**
(45) Veröffentlichungstag und Bekanntmachung des Hinweises auf die Patenterteilung: **02.09.2020**
(21) Anmeldenummer: 12721723.0
(22) Anmeldetag: 29.02.2012
(51) Int. Cl.: B60W 10/20, B60W 10/18, B60W 30/09, B60W 30/095, B60W 50/16, G08G 1/16

(54) **BEGRENZUNG DER AKTIVIERUNG EINES AUSWEICHASSISTENTEN**
LIMITING THE ACTIVATION OF AN EVASIVE STEERING SUPPORT
LIMITATION DE L'ACTIVATION D'UN SYSTÈME D'AIDE À L'ÉVITEMENT

(30) Priorität: 04.03.2011 DE 102011005094
(43) Veröffentlichungstag der Anmeldung: 08.01.2014
(73) Patentinhaber: Continental Teves AG & Co. OHG, 60488 Frankfurt am Main (DE)
(72) Erfinder: HARTMANN, Andreas, 88433 Aßmannshardt (DE); BIAN, Ning, 65760 Eschborn (DE); BRETZIGHEIMER, Kai, 63741 Aschaffenburg (DE); STAAB, Thorsten, 63768 Hösbach (DE); FÖRSTER, Daniel, 64287 Darmstadt (DE)
(86) Internationale Anmeldenummer: PCT/DE2012/100049
(87) Internationale Veröffentlichungsnummer: WO 2012/119595

(56) Entgegenhaltungen:
- EP-A1- 1 684 142
- DE-A1- 10 036 276
- DE-A1- 10 336 986
- DE-A1-102005 005 720
- DE-A1-102009 025 607

## Beschreibung

Die vorliegende Erfindung betrifft ein Verfahren für ein Fahrerassistenzsystem, z.B. zur Durchführung eines Ausweichmanövers und/oder einer Notbremsung und/oder einer Kollisionswarnung
Bekannt sind umfeldsensorbasierte Notbremsunterstützungssysteme (Emergency Brake Assist (EBA), oder Collision Mitigation Systems (CMS)). Diese Systeme basieren auf Umfelderfassungssensoren, i.d.R. handelt es sich um an der Fahrzeugfront montierte Radarsensorik. Die Systeme erfassen das Umfeld vor dem Fahrzeug und können die Kollisionsgefahr mit vorausfahrenden Fahrzeugen bzw. Gegenständen bewerten.
Diese Systeme haben das Ziel, den Fahrer in kritischen, kollisionsgefährdenden Auffahrsituationen bei der Notbremsung zu unterstützen, indem etwa das Bremssystem vorbefüllt wird oder die Auslöseschwellen für den hydraulischen Bremsassistenten abgesenkt werden. Neuere Systeme leiten, ggf. sogar fahrerunabhängig, automatisch eine Bremsung des Fahrzeugs ein. Diese ist je nach Auslegung zeitlich und/oder in der Stärke und/oder in der Aufbaugeschwindigkeit (Gradient) begrenzt oder auch unbegrenzt.

Weiterhin bekannt sind auch Auffahrwarnsysteme / Forward Collision Warning (FCW) Systeme, welche den Fahrer bei einer Kollisionsgefahr mit vorausfahrenden Fahrzeugen bzw. Gegenständen warnen. Die Erkennung von Objekten erfolgt durch Umfelderfassungssensoren, wie Radarsensorik und/oder Kamerasysteme. Die Warnung erfolgt optisch, akustisch und/oder haptisch, etwa durch einen kurzzeitigen automatischen Bremsdruckaufbau.

Eine Weiterentwicklung von Auffahrwarn- und Notbremssystemen stellen Notausweichsysteme dar. Diese sind noch nicht auf dem Markt erhältlich, jedoch in der Forschung und in zahlreichen Patentschriften beschrieben.
Notausweichsysteme können z.B. das Fahrzeugverhalten situativ adaptieren und somit auf eine mögliche Notausweichsituation einstellen z. B. durch Hinterachslenkung, und Querstabililsatoren. Weiterhin können Notausweichsysteme dem Fahrer Warnungen geben, die z. B. optisch, akustisch oder haptisch ausgestaltet sind.

Weiterhin kann der Fahrer beim Notausweichmanöver über Lenk- und/oder Bremseingriffe unterstützt werden, um einen sicheren Spurwechsel durchzuführen. Weiterhin kann auch ein automatisches Ausweichen durch das System erfolgen.

Ein Notausweichsystem setzt in der Regel, aber nicht notwendigerweise, eine erfolgte Aktivierung eines Notbremssystems voraus. Gerade bei hohen Relativgeschwindigkeiten und bei niedrigen Reibwerten ist das Ausweichen meist noch erheblich später möglich als ein Bremsmanöver zur Vermeidung einer Kollision. Da Bremsen, das i. d. R. in der eigenen Fahrspur erfolgt, jedoch aufgrund der Reduktion der kinetischen Energie oft sicherer ist als Lenken, hier droht bei Verlassen der Spur z. B. Gefahr durch Gegenverkehr, ist die erfolgte Aktivierung eines Notbremssystems als Aktivierungsbedingung für ein Notausweichsystem sinnvoll.
Um die funktionale Sicherheit des Systems z.B. nach ISO26262 zu gewährleisten sollen vor allem Fehlaktivierungen im Nichtnutzfall verhindert werden.
Die Absicherung von Auffahrwarn- und Notbremssystemen erfolgt i.d.R. über Dauerläufe, bei denen die Daten der Umfelderfassungssysteme, z.B. Radardaten, und Daten des eigenen Fahrzeugs (CAN Daten) aufgezeichnet werden. Durch softwarebasierte Simulation der Signalverarbeitungskette können so Fehlaktivierungen erkannt werden und statistisch ausgewertet werden. Damit kann die Robustheit von Systemen abgesichert werden, deren Aktivierung auf der positiven Sensorinformation "Objekt erkannt" beruht. Dies sind z.B. Auffahrwarn- und Notbremssysteme. Wird etwa ein nicht wirklich existierendes Objekt erkannt, stellt dies eine Fehlaktivierung dar ("False Positive" Fehler). Solche Missinterpretationen können z.B. bei Radarsystemen bei Brücken auftreten. Ein "False Positive" Fehler der Aktivierung einer Funktion lässt sich daher bei oben genannten Funktionen meist auf einen "False Positive" Fehler des Umfelderfassungssystems zurückführen. Bei einer Freiraumerkennung für ein Ausweichfahrerassistenzsystem verhält es sich jedoch gerade andersherum, hier muss sicher erkannt werden, dass sich kein Objekt im Ausweichraum befindet. Für eine sichere Funktion eines Ausweichfahrerassistenzsystems wird also ein Umfelderfassungssystem benötigt, dass "False Negativ" Fehler vermeidet.

Die Schrift DE10 2009 025 607 A1 offenbart, dass eine Bestimmung möglicher Freiräume für eine Ausweichbewegung vorzugsweise anhand einer digitalen Straßenkarte und GPS vorgenommen wird. Ein Freiraum kann alternativ oder zusätzlich auch mit einem Kamerasystem und/oder Radarsystem und/oder IR-System bestimmt werden.

Die DE 100 36 276 A1 beschreibt ein automatisches Brems- und Lenksystem für ein Fahrzeug. Dazu wird eine Regel bzw. Steuereinheit angegeben, die basierend auf den Daten eines Umfelderfassungssensors Ausweichrouten zur Kollisionsvermeidung unter Beachtung zusätzlicher Randbedingungen, die z.B. aus einer elektronischen Karte gewonnen werden, auswählt,

Es ist die Aufgabe der hier vorliegenden Erfindung einen Fahrer eines Fahrzeugs bei Kollisionsgefahr effektiv zu unterstützen und einen Ausweichraum sicher zu erkennen.

Diese Aufgabe wird durch die Merkmale der unabhängigen Ansprüche gelöst, die ein Verfahren und eine Vorrichtung für eine sichere Freiraumerkennung für einen AusweichFahrerassistenzsystem angegeben.

Das erfindungsgemäße Verfahren ist für ein Fahrerassistenzsystem für ein Fahrzeug bestimmt. Dazu werden Objekte in einer Fahrzeugumgebung anhand von Daten eines Umfelderfassungssystems erfasst. Weiterhin wird ein potentieller Freiraum, d. h. ein Raum in dem nur keine Objekte und/oder überfahrbare Objekte, z.B. Fahrspurmarkierungen, sicher von dem Umfelderfassungssystem erfasst wurden, ermittelt. Wird ein potentieller Freiraum ermittelt, so muss dieser anhand weiterer Fahrzeug- und Umfeldinformationen verifiziert werden bevor auf Grundlage des verifizierten Freiraums z. B. eine Ausgabe an einen Fahrer bzw. ein automatischer Lenk- bzw. Bremseingriff erfolgt. Gegenstand der hier vorliegenden Erfindung ist eine sichere Freiraumerkennung für Fahrerassistenzsysteme um eine unangemessene Gefahr für Verkehrsteilnehmer zu vermeiden. Z.B. erfolgt eine Ausweichempfehlungen oder ein automatischer Lenkeingriff nur bei "Positiv-Erkennung" einer Verkehrssituation als eine oder mehrere Zusatzbedingungen zur Aktivierung.

Insbesondere wird bei der Verifizierung geprüft, ob es sich bei dem Freiraum um eine Fahrbahn handelt. Fahrbahn wird hier im Sinne eines von einem Fahrzeug gefahrlos überfahrbaren Raumes verwendet. Dieser umfasst z.B. einen Raum, der frei ist von erhabenen, nicht überfahrbaren Objekten und/oder einen Raum mit einem planaren Untergrund, um z.B. ein Ausweichen in den Straßengraben zu vermeiden. Insbesondere wird eine Fahrbahn anhand von einem oder mehreren der folgenden Kriterien verifiziert
- Erkennung von Fahrspurmarkierungen, die i.d.R. am Rand einer Fahrbahn angeordnet sind, insbesondere mit einem Umfelderfassungssystem, das z.B als Kamerasystem ausgestaltet ist,
- Erkennung einer Fahrbahnrandbebauung insbesondere mit einem Umfelderfassungssystem,
- andere Fahrzeuge haben sich früher in dem potentiellen Freiraum aufgehalten, dies ist eine Indikator für einen überfahrbaren Raum, wobei die anderen Fahrzeuge vorzugsweise durch ein Umfelderfassungssystem erkannt wurden,
- Informationen aus einer elektronischen Karte bei Erkennung der eigenen Position mit einen Ortungssystem, wobei Informationen aus der elektronischen Karte Hinweise über die Fahrzeugumgebung geben.

In einer weiteren positiven Ausgestaltung der Erfindung wird bei der Verifizierung geprüft, mit welchem Wahrscheinlichkeitswert sich schwer erfassbare Objekte, insbesondere Fußgänger oder Gegenverkehr, in einem potentiellen Freiraum aufhalten und der potentielle Freiraum wird bei einem Wahrscheinlichkeitswert oberhalb eines Schwellwerts nicht verifiziert.

Insbesondere wird ein Wahrscheinlichkeitswert anhand der Fahrzeugumgebung bestimmt.

In einer bevorzugten Ausgestaltung der Erfindung wird ein erhöhter Wahrscheinlichkeitswert für einen Fußgänger in Abhängigkeit von einem oder mehreren der folgenden Kriterien angenommen
- Umgebung eines Zebrastreifen, wobei der Zebrastreifen insbesondere anhand von Informationen aus einer elektronischen Karte bei Erkennung der eigenen Position mit einen Ortungssystem und/oder mit einem Umfelderfassungssensor, insbesondere einem Kamerasensorsystem und/oder einem LIDARsensorsystem, erkannt wird,
- die Geschwindigkeit des eigenen Fahrzeugs ist unterrhalb eines Schwellwerts, wobei dieser Schwellwert z.B. als Indikator für eine Fahrsituation innerhalb einer Stadt oder Ortschaft mit einer erhöhten Wahrscheinlichkeit für Fußgänger dient; bevorzugt nimmt der Schwellwert einen Wert zwischen 30 und 100 km/h, insbesondere von 50-70 km/h ein,
- ein Bürgersteig, der insbesondere anhand von Informationen aus einer elektronischen Karte bei Erkennung der eigenen Position mit einen Ortungssystem und/oder mit einem Umfelderfassungssensor erkannt wird und als Indikator für einen Bereich mit einem erhöhten Wahrscheinlichkeitswert für Fußgänger gewertet wird.

In einer bevorzugten Ausgestaltung der Erfindung wird eine Wahrscheinlichkeit für Gegenverkehr in Abhängigkeit von einem oder mehreren der folgenden Kriterien bewertet
- eine Geschwindigkeit eines eigenen Fahrzeugs ist oberhalb eines Schwellwerts (geringe Wahrscheinlichkeit für Gegenverkehr),
- Erkennung von Verkehrszeichen insbesondere zur Geschwindigkeitsbegrenzung vorzugsweise mit einem Umfelderfassungssystem, welche aufgrund ihres Typs (z.B. Geschwindigkeitsbegrenzungen größer als 100 km/h) auf eine durch bauliche Maßnahmen getrennte Gegenspur hinweisen (geringe Wahrscheinlichkeit für Gegenverkehr),
- Bestimmung der Anzahl von Fahrspuren anhand der Erkennung von Fahrspurmarkierungen insbesondere mit einem Umfelderfassungssystem (bei einer hohen Anzahl von Fahrspuren wird vorzugsweise eine geringe Wahrscheinlichkeit für Gegenverkehr angenommen),
- Erkennung einer Fahrbahnrandbebauung insbesondere mit einem Umfelderfassungssystem, wobei sich andere Fahrzeuge auf der gleichen Seite der erkannten Randbebauung wie das eigene Fahrzeug in die gleiche Richtung wie das eigene Fahrzeug bewegen (vorzugsweise geringe Wahrscheinlichkeit für Gegenverkehr).
- Informationen aus einer elektronischen Karte bei Erkennung der eigenen Position mit einen Ortungssystem.

In einer besonderen Ausgestaltung der Erfindung wird die zuvor beschriebene Freiraumerkennung in einem Notausweichassistenzsystem eingesetzt. Ein Notausweichassistenzsystem leitet z.B. ein automatisches Ausweichmanöver in einen Freiraum ein oder gibt eine Ausweichempfehlung an einen Fahrer aus. Die Ausgabe einer Ausweichempfehlung erfolgt insbesondere optisch und/ oder akustisch und /oder haptisch an den Fahrer. In einer postiven Ausgestaltung der Erfindung wird alternativ oder zusätzlich in Abhängigkeit von dem verifizierten Freiraum eine Kollisionswarnung an einen Fahrer ausgegeben und/oder eine automatische Notbremsung eingeleitet. Falls kein verifizierter Freiraum -und damit keine Ausweichmöglichkeit- vorhanden ist, erfolgt eine Warnung bzw. ein automatischer Bremseingriff früher als in einer Situation, in der ein Ausweichen noch möglich ist.

Die Erfindung wird nachfolgend anhand von Figuren und Ausführungsbeispielen näher erläutert.

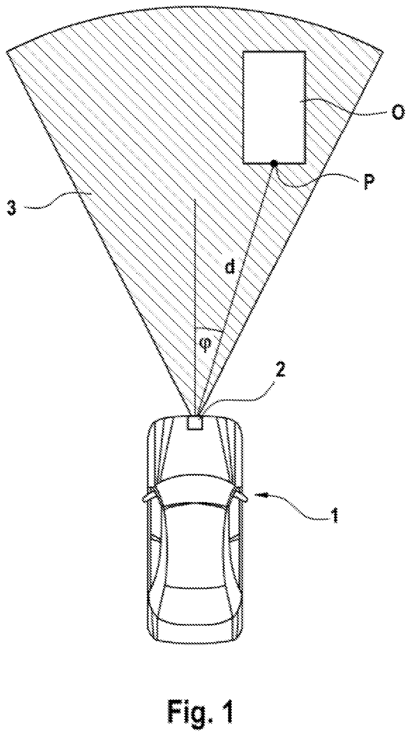

In Fig. 1 ist beispielhaft ein vierrädriges, zweiachsiges Fahrzeug 1 dargestellt, das über einen Umfeldsensor 2 verfügt, mit dem Objekte O im Umfeld des Fahrzeugs erfasst werden können, bei denen es sich insbesondere um weitere Kraftfahrzeuge handelt, die sich in derselben oder einer benachbarten Fahrspur seitlich und/oder vor dem Fahrzeug 1 bewegen.
Vorzugsweise verfügt das Fahrzeug über einen weiteren Umfeldsensor oder mehrere weitere Umfeldsensoren, die einen Bereich neben und/oder hinter dem Fahrzeug erfassen. Der Erfassungsbereich dieses Sensors bzw. dieser Sensoren ist nicht in Fig. 1 dargestellt.
Als Objekte O kommen aber auch statische oder nahezu statische Objekte wie beispielsweise Bäume, Fußgänger oder Fahrbahnbegrenzungen in Frage. Beispielhaft wird ein Umfeldsensor 2 mit einem Erfassungsbereich 3 gezeigt, der einen Raumwinkel vor dem Fahrzeug 1 umfasst, in dem beispielhaft ein Objekt O dargestellt ist. Bei dem Umfeldsensor 2 handelt sich z.B. um einen LIDAR-Sensor (Light Detection and Ranging) der dem Fachmann an sich bekannt ist; gleichfalls sind jedoch auch andere Umfeldsensoren einsetzbar. Der Sensor misst die Abstände d zu den erfassten Punkten eines Objekts sowie die Winkel *ϕ* zwischen den Verbindungsgeraden zu diesen Punkten und der Mittellängsachse des Fahrzeugs, wie dies in Fig. 1 beispielhaft für einen Punkt P des Objekts O veranschaulicht ist. Die dem Fahrzeug 1 zugewandten Fronten der erfassten Objekte setzen sich aus mehreren erfassten Punkten zusammen, zu der die Sensorsignale übermittelt werden, die Korrelationen zwischen Punkten und der Form eines Objekts herstellt und einen Bezugspunkt für das Objekt O bestimmt. Als Bezugspunkt kann dabei beispielsweise der Mittelpunkt des Objekts O bzw. der Mittelpunkt der erfassten Punkte des Objekts gewählt werden. Die Geschwindigkeiten der detektierten Punkte und damit die Geschwindigkeit der erfassten Objekte können im Gegensatz zu einem Radar-Sensor(Doppler-Effekt) mittels des LIDAR-Umfeldsensors 2 nicht direkt gemessen werden. Sie werden aus der Differenz zwischen den in aufeinander folgenden Zeitschritten gemessenen Abständen in einer taktweise arbeitenden Objekterkennungseinheit 21 berechnet. In ähnlicher Weise kann grundsätzlich auch die Beschleunigung der Objekte durch zweimaliges Ableiten ihrer Positionen bestimmt werden.

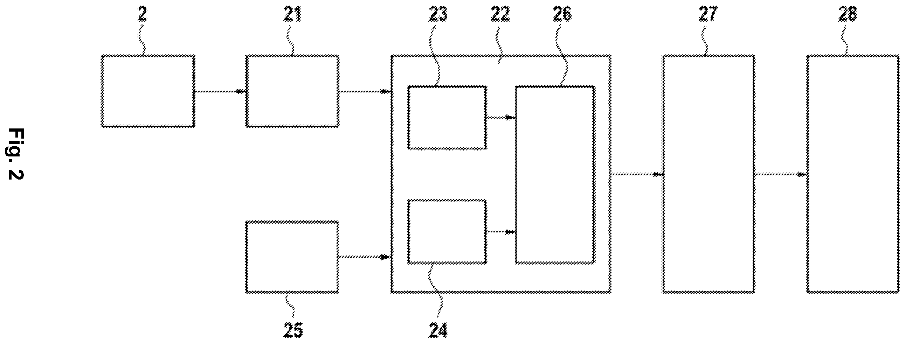

Fig. 2 zeigt eine schematische Darstellung eines Fahrerassistenzsystems, dessen Bestandteile mit Ausnahme von Sensoren und Aktuatoren vorzugsweise als Softwaremodule ausgeführt sind, die innerhalb des Fahrzeugs 1 mittels eines Mikroprozessors ausgeführt werden. Wie in Fig. 2 gezeigt, werden die Objektdaten in Form elektronischer Signale innerhalb des schematisch dargestellten Fahrerassistenzsystems an eine Entscheidungseinrichtung 22 übermittelt. In der Entscheidungseinrichtung 22 wird in Block 23 anhand der Informationen über das Objekt O eine Objekttrajektorie bestimmt. Ferner wird eine Trajektorie des Fahrzeugs 1 in Block 24 anhand von Informationen über den fahrdynamischen Zustand des Fahrzeugs 1 ermittelt, die mit Hilfe von weiteren Fahrzeugsensoren 25 bestimmt werden. Insbesondere werden dabei die beispielsweise mit Hilfe von Raddrehzahlsensoren ermittelbare Fahrzeuggeschwindigkeit, der mittels eines Lenkwinkelsensors gemessene Lenkwinkel δ an den lenkbaren Rädern des Fahrzeugs 1, die Gierrate und/oder die Querbeschleunigung des Fahrzeugs 1, die mittels entsprechender Sensoren gemessen werden, herangezogen. Darüber hinaus ist es möglich, aus den mit den Fahrzeugsensoren 25 gemessenen fahrdynamischen Zuständen des Fahrzeugs modellbasierte Größen zu berechnen bzw. zu schätzen. Dann wird in der Entscheidungseinrichtung 22 innerhalb des Blocks 26 überprüft, ob sich das Kraftfahrzeug 1 auf einem Kollisionskurs mit einem der erfassten Objekte O befindet. Falls ein derartiger Kollisionskurs festgestellt wird und die ebenfalls in der Entscheidungseinrichtung 22 ermittelte Kollisionszeit (TTC, Time To Collision), d.h. die Zeitdauer bis zu der ermittelten Kollision mit dem Objekt O, einen bestimmten Wert unterschreitet, wird ein Auslösesignal an eine Bahnvorgabeeinrichtung 27 übermittelt. Das Auslösesignal führt dazu, dass zunächst innerhalb der Bahnvorgabeeinrichtung eine Ausweichbahn *y*(*x*) berechnet wird. Dann wird aufgrund der ermittelten Ausweichbahn *y*(*x*) ein Startpunkt für das Ausweichmanöver bestimmt, an dem das Ausweichmanöver gestartet werden muss, um dem Objekt O gerade noch ausweichen zu können. Diese Schritte werden vorzugsweise in Zeitschritten wiederholt, bis keine Kollisionsgefahr aufgrund von Kursänderungen des Objekts O oder des Fahrzeugs 1 mehr besteht oder bis das Fahrzeug 1 den Startpunkt für ein Ausweichmanöver erreicht.

Ist dies der Fall, werden die Ausweichbahn *y*(*x*) oder diese Bahn repräsentierende Parameter an eine Lenkungsaktuatorsteuerung 28 übermittelt. Diese steuert dann eine elektromechanisch betätigbare Vorderrad-Lenkvorrichtung V an und erzeugt eine Vibration oder eine Schwingung, die für den Fahrzeugführer am Lenkrad seines Kraftfahrzeugs 1 spürbar ist. Durch diese Warnung X1 wird der Fahrzeugführer darauf aufmerksam gemacht, dass sich das von ihm gesteuerte Kraftfahrzeug 1 auf einem Kollisionskurs mit einem Objekt O befindet. Das Einlenken des Fahrzeugführers wird über die Änderung des Lenkwinkels δV, das heißt über die zeitliche Ableitung des Lenkwinkels der Vorderräder *δ̇*V, erfasst.

Um bei einem Notausweichsystem, welches eine Freiraumerkennung voraussetzt, nicht ausschließlich von der Zuverlässigkeit und Abdeckung der Freiraumerkennung basierend auf der Umfeldsensorik abhängig zu sein hinsichtlich der funktionalen Robustheit gegen Fehlaktivierungen, werden Aktivierungen auf eindeutig erkannte Verkehrssituationen bzw. Umfeldbedingungen eingeschränkt.

Hierzu werden bei der vorliegenden Erfindung zusätzliche Aktivierungsbedingungen einbezogen.
Im Gegensatz zur Freiraumerkennung müssen die zusätzlichen Bedingungen auf einer "Positiv-Erkennung" beruhen.
Die positiv erkannten Daten müssen eindeutige Rückschlüsse auf die Verkehrssituation bzw. Umfeldbedingungen ermöglichen, in welcher sich das eigene Fahrzeug befindet. Eine Aktivierung kann damit auf Verkehrssituation bzw. Umfeldbedingungen eingeschränkt werden, in denen eine auf heutigen Umfelderfassungssenoren basierende Freiraumerkennung mit hoher Wahrscheinlichkeit zuverlässig ist bzw. die Wahrscheinlichkeit gering ist, dass eine Aktivierung unangemessene Gefahren, z.B. für Fußgänger, die sich im vermeintlichen Freiraum befinden oder z.B. ein Straßengraben, darstellen könnte.

Diese Bedingungen gehen über die bekannte Aktivierungsbedingung einer bereits erfolgten Aktivierung eines Notbremssystems hinaus. Eine erkannte Notbremssituation deutet nicht hinreichend auf eine Verkehrssituation bzw. Umfeldbedingungen, in denen eine auf heutigen Umfelderfassungssenoren basierende Freiraumerkennung mit hoher Wahrscheinlichkeit zuverlässig ist bzw. die Wahrscheinlichkeit gering ist, dass eine Aktivierung unangemessene Gefahren darstellen könnte.

Eine Verkehrssituation bzw. Umfeldbedingung kann in einer vorteilhaften Ausführung der Erfindung etwa durch ein kamerabasiertes Spurerkennungssystem erkannte Fahrbahnmarkierungen auch von Nachbarfahrspuren darstellen. Wird eine Nachbarfahrspur so eindeutig als solche erkannt, z.B. wenn Fahrbahnmarkierungen links und rechts der Nachbarfahrspur erkannt werden, kann mit sehr hoher Wahrscheinlichkeit davon ausgegangen werden, dass es sich um eine Straße handelt und nicht etwa um einen Graben.

Durch Erweiterung der erforderlichen eindeutig erkannten Bedingungen kann die Wahrscheinlichkeit weiter verringert werden, in einer Verkehrssituation bzw. bei Umfeldbedingung eine Aktivierung durchzuführen, in der dies unangemessen wäre insbesondere bei einem Fußgängerüberweg/Zebrastreifen.

Weitere Bedingungen sind z.B.:
- Mindestgeschwindigkeit des eigenen Fahrzeugs, die z.B. über Raddrehzahlsensoren erkannt werden. Eine hohe Geschwindigkeit bedeutet eine geringe Wahrscheinlichkeit für innerstädtische Verkehrssituation und damit ist ein Wahrscheinlichkeitswert für die Anwesenheit von Fußgängern gering.
- Ort des eigenen Fahrzeugs, erkannt über Navigationsdaten mit GPS Positionierung und Kartenmaterial. Z.B. die Erkennung der Position des Fahrzeugs auf einer dreispurigen Autobahn. Hier ist die Wahrscheinlichkeit für eine Anwesenheit von Fußgängern gering
- durch vorhandene Umfelderfassungssysteme erkannte Randbebauung, diese bildet die Begrenzung einer Straße,
- durch vorhandene Umfelderfassungssysteme erkannte andere Fahrzeuge, hier ist eine Fahrspur wahrscheinlich.

## Patentansprüche

1. Verfahren für ein Fahrerassistenzsystem für ein Fahrzeug, wobei
- Objekte in einer Fahrzeugumgebung anhand von Daten eines Umfelderfassungssystems erfasst werden, und
- ein potentieller Freiraum, in dem nur keine und/oder überfahrbare Objekte sicher erfasst wurden, ermittelt wird,
wobei der potentielle Freiraum anhand weiterer Fahrzeug- und Umfeldinformationen verifiziert wird und eine Ausgabe an einen Fahrer bzw. ein automatischer Lenk- bzw. Bremseingriff in Abhängigkeit von dem verifizierten Freiraum erfolgt, und
bei der Verifizierung geprüft wird, ob es sich bei dem Freiraum um eine Fahrbahn handelt, wobei eine Fahrbahn anhand von einem oder mehreren der folgenden Kriterien verifiziert wird
- Erkennung von Fahrspurmarkierungen, insbesondere mit einem Umfelderfassungssystem,
- Erkennung einer Fahrbahnrandbebauung, insbesondere mit einem Umfelderfassungssystem,
- andere Fahrzeuge haben sich früher in dem potentiellen Freiraum aufgehalten.

2. Verfahren nach Anspruch 1,
**dadurch gekennzeichnet, dass**
bei der Verifizierung geprüft wird, mit welchem Wahrscheinlichkeitswert sich schwer erfassbare Objekte, insbesondere Fußgänger oder Gegenverkehr, im potentiellen Freiraum aufhalten und der potentielle Freiraum bei einem Wahrscheinlichkeitswert oberhalb eines Schwellwerts nicht verifiziert wird.

3. Verfahren nach Anspruch 2,
**dadurch gekennzeichnet, dass**
eine erhöhte Wahrscheinlichkeit für einen Fußgänger angenommen wird, wenn eine Geschwindigkeit des eigenen Fahrzeugs unterhalb eines Schwellwerts ist.

4. Verfahren nach Anspruch 1,
**dadurch gekennzeichnet, dass**
der Wahrscheinlichkeitswert für Gegenverkehr gering ist, wenn eine Geschwindigkeit eines eigenen Fahrzeugs oberhalb eines Schwellwerts ist.

5. Verfahren nach Anspruch 2,
**dadurch gekennzeichnet, dass**
der Wahrscheinlichkeitswert anhand einer Fahrzeugumgebung bestimmt wird.

6. Verfahren nach Anspruch 5,
**dadurch gekennzeichnet, dass**
eine erhöhte Wahrscheinlichkeit für einen Fußgänger in Abhängigkeit von einem oder mehreren der folgenden Kriterien angenommen wird
- in der Umgebung eines Zebrastreifens, wobei der Zebrastreifen insbesondere anhand von Informationen aus einer elektronischen Karte bei Erkennung der eigenen Position mit einen Ortungssystem und/oder mit einem Umfelderfassungssensor erkannt wird;
- auf einem Bürgersteig, wobei der Bürgersteig insbesondere anhand von Informationen aus einer elektronischen Karte bei Erkennung der eigenen Position mit einem Ortungssystem und/oder mit einem Umfelderfassungssensor erkannt wird.

7. Verfahren nach Anspruch 5,
**dadurch gekennzeichnet, dass**
der Wahrscheinlichkeitswert für Gegenverkehr in Abhängigkeit von einem oder mehreren der folgenden Kriterien bestimmt wird
- Erkennung von Verkehrszeichen insbesondere Geschwindigkeitsbegrenzungen welche aufgrund ihres Typs auf eine durch bauliche Maßnahmen getrennte Gegenspur hinweisen,
- Anzahl von Fahrspuren, insbesondere wird die Anzahl anhand einer Erkennung von Fahrspurmarkierungen bestimmt,
- Erkennung einer Fahrbahnrandbebauung, insbesondere mit einem Umfelderfassungssystem, wobei die Fahrtrichtung anderer Fahrzeuge auf der gleichen Seite der erkannten Randbebauung analysiert wird.
- Informationen aus einer elektronischen Karte bei Erkennung der eigenen Position mit einem Ortungssystem.

8. Verfahren nach einem der vorherigen Ansprüche,
**dadurch gekennzeichnet, dass**
auf Grundlage des verifizierten Freiraums eine Aktivierung einer Ausweichfunktion erfolgt.

9. Verfahren nach einem der Ansprüche 1-8,
**dadurch gekennzeichnet, dass**
bei einer Kollisionsgefahr eine Warnung vor einer Kollision bzw. ein automatischer Verzögerungseingriff früher eingeleitet wird, wenn kein verifizierter Freiraum erkannt wurde.

10. Fahrerassistenzsystem für ein Fahrzeug, umfassend:
ein Umfelderfassungssystem, das Objekte in einer Fahrzeugumgebung erfasst, und
eine Auswerteeinheit zur Ermittlung eines potentiellen Freiraums, in dem nur keine und/oder überfahrbare Objekten sicher erfasst wurden,
Mittel zur Verifizierung des potentiellen Freiraums anhand weiterer Fahrzeug - und Umfeldinformationen auf dem ein Verfahren nach einem der vorherigen Ansprüche hinterlegt ist,
Mittel zur Durchführung einer Ausweichfunktion und/oder Mittel zur Warnung eines Fahrers vor einer Kollision und/oder Mittel zur Verzögerung eines Fahrzeugs in Abhängigkeit von dem verifizierten Freiraum.

11. Fahrerassistenzsystem nach Anspruch 8,
**dadurch gekennzeichnet, dass**
die Ausweichfunktion als ein automatischer Lenkeingriff oder eine Ausgabe einer Ausweichempfehlung an den Fahrer ausgestaltet ist.

## Claims

1. A method for a driver assistance system for a vehicle, wherein
- objects in the surroundings of a vehicle are detected on the basis of data of an environment detection system, and
- a potential free zone, in which only no objects and/or objects which the vehicle can drive over have been reliably detected, is established,
wherein
the potential free zone is verified on the basis of further vehicle and environment information and an output is made to a driver or respectively an automatic steering or respectively braking intervention is effected depending on the verified free zone, and
it is checked during the verification whether the free zone is a roadway, wherein a roadway is verified on the basis of one or more of the following criteria:
- recognition of lane markings, particularly with an environment detection system,
- recognition of a roadside structure, particularly with an environment detection system,
- other vehicles have previously been present in the potential free zone.

2. The method according to Claim 1,
**characterized in that**
it is checked during the verification with which probability value difficult-to-detect objects, particularly pedestrians or oncoming traffic, are present in the potential free zone, and the potential free zone is not verified at a probability value above a threshold value.

3. The method according to Claim 2,
**characterized in that**
an increased probability for a pedestrian is assumed if a speed of the ego-vehicle is below a threshold value.

4. The method according to Claim 1,
**characterized in that**
the probability value for oncoming traffic is low if a speed of an ego-vehicle is above a threshold value.

5. The method according to Claim 2,
**characterized in that**
the probability value is determined on the basis of the surroundings of a vehicle.

6. The method according to Claim 5,
**characterized in that**
an increased probability for a pedestrian is assumed depending on one or more of the following criteria:
- in the surroundings of a crosswalk, wherein the crosswalk is recognized particularly on the basis of information from an electronic map when recognizing the ego-position with a locating system and/or with an environment detecting sensor;
- on a sidewalk, wherein the sidewalk is recognized particularly on the basis of information from an electronic map when recognizing the ego-position with a locating system and/or with an environment detecting sensor.

7. The method according to Claim 5,
**characterized in that**
the probability value for oncoming traffic is determined depending on one or more of the following criteria:
- recognition of road signs, particularly speed limit signs, that indicate, on account of their type, the presence of an opposite lane separated by constructional measures,
- number of lanes, the number being particularly determined on the basis of a recognition of lane markings,
- recognition of a roadside structure, particularly with an environment detecting system, wherein the direction of travel of other vehicles on the same side of the recognized roadside structure is analyzed,
- information from an electronic map when recognizing the ego-position with a locating system.

8. The method according to any one of the preceding claims,
**characterized in that**
an evasive function is activated on the basis of the verified free zone.

9. The method according to any one of Claims 1 - 8,
**characterized in that**
in the event of a risk of collision, a collision warning or respectively an automatic decelerating intervention is initiated earlier if no verified free zone has been recognized.

10. A driver assistance system for a vehicle, comprising:
an environment detection system which detects objects in the surroundings of a vehicle, and
an evaluation unit for establishing a potential free zone, in which only no objects and/or objects which the vehicle can drive over have been reliably detected,
means for verifying the potential free zone on the basis of further vehicle and environment information, on which a method according to any one of the preceding claims is stored,
means for carrying out an evasive function and/or means for warning a driver about a collision and/or means for decelerating a vehicle depending on the verified free zone.

11. The driver assistance system according to Claim 8,
**characterized in that**
the evasive function is configured as an automatic steering intervention or an output recommending the driver to perform an evasive maneuver.

## Revendications

1. Procédé pour un système d'aide à la conduite pour un véhicule,
- des objets étant détectés dans un environnement de véhicule à l'aide de données d'un système de détection d'environnement, et
- l'existence d'un espace libre potentiel dans lequel ont uniquement été détecté des objets pouvant être traversés et/ou aucun objet étant déterminée,
l'existence de l'espace libre potentiel étant confirmée à l'aide d'autres informations de véhicule et d'environnement et une émission étant effectuée à l'attention d'un conducteur ou une intervention de direction ou de freinage étant exécutée en fonction de la confirmation de l'existence de l'espace libre, et
le fait de savoir si l'espace libre est une chaussée étant vérifié lors de la confirmation, une chaussée étant déterminée à l'aide de l'un ou de plusieurs des critères suivants
- reconnaissance de marquages de voie, en particulier à l'aide d'un système de détection d'environnement,
- reconnaissance d'équipements de bordure de chaussée, en particulier à l'aide d'un système de détection d'environnement,
- d'autres véhicules se sont trouvés antérieurement dans l'espace libre potentiel.

2. Procédé selon la revendication 1,
**caractérisé en ce que**
le fait de savoir avec quelle valeur de probabilité des objets difficiles à détecter, en particulier des piétons ou une circulation en sens inverse se trouvent dans l'espace libre potentiel est vérifié lors de la confirmation et **en ce que** l'existence de l'espace libre potentiel n'est pas confirmée pour une valeur de probabilité supérieure à une valeur seuil.

3. Procédé selon la revendication 2,
**caractérisé en ce qu'**
une probabilité accrue pour un piéton est supposée lorsqu'une vitesse du propre véhicule est inférieure à une valeur seuil.

4. Procédé selon la revendication 1,
**caractérisé en ce que**
la valeur de probabilité est faible pour une circulation en sens inverse lorsqu'une vitesse du propre véhicule est supérieure à une valeur seuil.

5. Procédé selon la revendication 2,
**caractérisé en ce que**
la valeur de probabilité est déterminée à l'aide d'un environnement de véhicule.

6. Procédé selon la revendication 5,
**caractérisé en ce qu'**
une probabilité accrue pour un piéton est supposée en fonction de l'un ou de plusieurs des critères suivants
- dans la proximité d'un passage piéton, le passage piéton étant en particulier reconnu à l'aide d'informations provenant d'une carte électronique lors de la reconnaissance de la position propre avec un système de localisation et/ou avec un capteur de détection d'environnement ;
- sur un trottoir, le trottoir étant en particulier reconnu à l'aide d'informations provenant d'une carte électronique lors de la reconnaissance de la position propre avec un système de localisation et/ou avec un capteur de détection d'environnement.

7. Procédé selon la revendication 5,
**caractérisé en ce que**
la valeur de probabilité pour une circulation en sens inverse est déterminée en fonction de l'un ou de plusieurs des critères suivants
- reconnaissance de panneaux de signalisation, en particulier de limites de vitesse, lesquels indiquent, en raison de leur type, une voie opposée séparée du fait de mesures de construction,
- nombre de voies, le nombre étant en particulier déterminé à l'aide d'une reconnaissance de marquages de voie,
- reconnaissance d'équipement de bordures de chaussée, en particulier avec un système de détection d'environnement, le sens de conduite d'autres véhicules sur le même côté de l'équipement de bordure reconnu étant analysé.
- informations provenant d'une carte électronique lors de la reconnaissance de la position propre avec un système de localisation.

8. Procédé selon l'une des revendications précédentes,
**caractérisé en ce qu'**
une activation d'une fonction d'évitement est effectuée sur la base de la confirmation d'espace libre.

9. Procédé selon l'une des revendications 1-8,
**caractérisé en ce qu'**
un avertissement relatif à une collision ou une intervention de délai automatique étant mis en œuvre plus tôt lors d'un risque de collision, lorsqu'aucun espace libre vérifié n'a été reconnu.

10. Système d'aide à la conduite pour un véhicule, comprenant :
un système de détection d'environnement, lequel détecte des objets dans un environnement de véhicule, et
une unité d'analyse pour la détermination d'un espace libre potentiel, dans lequel aucun objet et/ou des objets pouvant être traversés ont été détectés avec sûreté,
des moyens pour la vérification de l'espace libre potentiel à l'aide d'autres informations de véhicules et d'environnement, sur lesquels un procédé selon l'une des revendications précédentes est enregistré,
des moyens pour l'exécution d'une fonction d'évitement et/ou des moyens pour l'avertissement d'un conducteur relatif à une collision et/ou des moyens pour la décélération d'un véhicule en fonction de l'espace libre vérifié.

11. Système d'aide à la conduite selon la revendication 8,
**caractérisé en ce que**
la fonction d'évitement est conçue comme une intervention de direction automatique ou comme une émission d'une recommandation d'évitement à l'attention du conducteur.
